(19) **Europäisches Patentamt**

**European Patent Office**

**Office européen des brevets**

(11) **EP 0 682 646 B1**

(12) **EUROPEAN PATENT SPECIFICATION**

(45) Date of publication and mention
of the grant of the patent:
**08.07.1998 Bulletin 1998/28**

(21) Application number: **94906262.4**

(22) Date of filing: **25.01.1994**

(51) Int Cl.$^6$: **C03C 4/08**, C03C 4/02,
C03C 1/10

(86) International application number:
**PCT/GB94/00141**

(87) International publication number:
**WO 94/18135 (18.08.1994 Gazette 1994/19)**

(54) **GLASS COMPOSITONS**

GLASZUSAMMENSETZUNGEN

COMPOSITIONS DE VERRE

(84) Designated Contracting States:
**AT BE CH DE DK ES FR GR IE IT LI LU MC NL PT
SE**

(30) Priority: **04.02.1993 GB 9302186**

(43) Date of publication of application:
**22.11.1995 Bulletin 1995/47**

(73) Proprietor: **PILKINGTON PLC
St. Helens, Merseyside WA10 3TT (GB)**

(72) Inventors:
• **FYLES, Kenneth, Melvin
Lancashire WN4 0SE (GB)**
• **McPHAIL, Helen, Louise
Near Wigan Lancashire WN4 8LL (GB)**

(74) Representative: **Pendlebury, Anthony et al
PAGE, WHITE & FARRER
54 Doughty Street
London WC1N 2LS (GB)**

(56) References cited:
EP-A- 0 507 985          EP-A- 0 555 552
EP-A- 0 561 337          FR-A- 2 082 647
FR-A- 2 672 587          GB-A- 2 162 835

• CHEMICAL ABSTRACTS, vol. 115, no. 2, 15 July
1991, Columbus, Ohio, US; abstract no. 14037x,
page 331 ; & JP,A,0 305 342 (NIPPON SHEET
GLASS CO. LTD.) 11 January 1991
• DATABASE WPI Week 8232, Derwent
Publications Ltd., London, GB; AN 82-66836 &
JP,A,57 106 537 (NIPPON SHEET GLASS KK) 2
July 1982
• CHEMICAL ABSTRACTS, vol. 106, no. 6, 9
February 1987, Columbus, Ohio, US; abstract
no. 37472, page 288 ; & JP,A,61 151 041
(MATSUSHITA ELECTRIC WORKS) 9 July 1986

## Description

The present invention relates to infra red (IR) and ultra violet (UV) absorbing soda lime silica glass compositions for use in glazing. More particularly, the present invention relates to windows of a neutral tint made from such glasses primarily, but not exclusively, for vehicles such as motor cars.

Special glasses have been developed for use in vehicles which have low levels of direct solar heat transmission (DSHT) and ultra violet transmission (UVT). These glasses aim to reduce the problems caused by excessive heating within the vehicle on sunny days, and to protect the interior furnishings of the car from the degradation caused by ultra violet radiation. Glasses having good infra red absorption properties are usually produced by reducing iron present in the glass to the ferrous state or by adding copper. Such materials give glasses a blue colour. The materials added to achieve good ultra violet radiation absorption are $Fe^{3+}$, Ce, Ti or V. The quantities of such materials which are added to provide the desired level of absorption tend to colour the glass yellow. Accordingly, if both good UV and good IR absorption are required in the same glass, the colour of such glass is, almost inevitably, either green or blue, When the colour of the glasses is defined by the CIELAB system, such commercial glasses, in 4 mm thickness and having greater than 60% light transmission, are found to be either very green (-a*>8) or very blue (-b*>7), neither of which are currently desirable from an aesthetic viewpoint.

Attempts have been made to produce grey or bronze-coloured vehicle glazing having good protection against both IR and UV radiation, but such glasses still tend to have a greenish yellow tinge. Thus, in French Patent Specification No. 2,672,587, the dominant wavelength (λD) of the exemplified glasses varies from 571 to 580 nm, and the colour purity is in the range 4.4 to 15.9%. These figures indicate that such glasses have a greenish yellow tinge. A neutral grey glass, ANTISUN (ANTISUN is a trade mark of the Pilkington Group) Grey, commercially available from Pilkington Glass Limited of St. Helens, England, has a dominant wavelength of 454 and a colour purity of 2.1% in a thickness of 4 mms.

We have identified a requirement for a range of glasses having a neutral tint such that, in the CIELAB system, the glasses have colour co-ordinates lying in the ranges a* from -6 to +5, b* from -5 to +5, if the visible light transmission of the glass is above 60% and in the ranges a* -12 to +5, b* -5 to +10 if the visible light transmission of the glass is below 60%. The term "neutral tint" is hereinafter used to describe glasses having such colour co-ordinates.

We have further identified a requirement for glasses having a neutral tint which have visible light transmissions greater than 32% (at a thickness of 4 mm), but which also have a direct solar heat transmission which is at least seven percentage points (preferably ten percentage points) less than the visible light transmission. Basically, glasses are known which do have a low direct solar heat transmission but nearly all of these have a low visible light transmission which tend to make such glasses of limited use in vehicles. Glasses satisfying the above-identified requirements should, we anticipated, be of more general use in vehicles due to the higher light transmission but the lower direct solar heat transmission should keep the interior of the car cool despite the higher light transmission.

Furthermore, we believed that it would be desirable if the glasses had an ultra-violet transmission ideally less than 25% because we felt that such a low transmission would minimize the adverse effects of ultra-violet radiation on plastics material and fabrics, particularly in automotive vehicles. At page 5, lines 32 to 35 of French Patent Specification No. 2,672,587 it is pointed out that both CoO and NiO reduce visible light transmission without contributing to either the absorbtion of ultra violet or infra red radiation, and that it is preferable not to add these components. An upper limit of 0.005% is suggested for CoO but the highest CoO content exemplified is 0.001%. This supports the teaching in the specification that these materials should not be used and, if they are, should be present only in limited quantities.

In French Patent 2,672,587, the quantity of Se used in the Examples tends to be of the same order or greater than the amount of tinting agent except in Example 9, where the $Fe_2O_3$ content is low at 0.178 and the colour purity has a high numerical value 9.6, indicating a substantial departure from a neutral appearance for a 4 mm glass of transmission greater than 60%.

The field of tinted glasses is one in which relatively small changes can produce major changes in tint. As one patentee has said, it is like a hunt for a needle in a haystack. Wide ranges disclosed in prior patents can encompass many possibilities, and it is only the teaching of the specific examples that can be relied on as identifying how particular tints associated with particular ranges of absorption of infra red and ultra violet radiation can be obtained. It is clear that in French Patent 2,672,587, the correct balance of components to achieve a neutral tint free of unacceptable dominance at wavelengths above 570 nm has not been taught. In attempting to get relatively low DSHT, French patent uses high levels of FeO and clearly it has not been recognised, as has been discovered in the present invention, that this can be balanced by addition of tinting agents without an unacceptable loss in visible light transmission.

Our invention is based on the surprising discovery that the incorporation of relatively small amounts of certain colouring agents compensates for the green colour arising from the presence of infra red and ultra violet radiation absorbing components.

According to the present invention. there is provided an IR and UV absorbing soda lime silica glass of a neutral tint (as herein defined) having a ferrous iron content calculated from the equation: -

$$\text{\% by weight FeO} \geq 0.007 + \frac{(\text{Optical Density} - 0.036)}{2.3}$$

and a total iron content, expressed as $Fe_2O_3$, in the range of from 0.25 to 1.75% by weight, the glass having been tinted to a neutral colour by one or more of Se, $Co_3O_4$, $Nd_2O_3$, NiO, MnO, $V_2O_5$, $CeO_2$, $TiO_2$, CuO and SnO the glass having, in 4 mm thickness, a visible light transmission of at least 32%, a UV transmission not greater than 25%, and a direct solar heat transmission at least 7 percentage points below the visible light transmission, and having a dominant wavelength preferably less than 570 nm; provided that, when the dominant wavelength is above 570 nm and the visible light transmission is greater than 60%, the colour purity is not greater than 4, and preferably less than 2, and that when Se is present, at least one other colourant selected from $Co_3O_4$, $Nd_2O_3$, NiO, MnO, CuO, SnO, $V_2O_5$, $CeO_2$ and $TiO_2$ is present in an amount by weight at least 1.5 times the amount of Se present, preferably 2 times as much. Preferably, the direct solar heat transmission is at least 10 percentage points lower than the visible light transmission.

The quantity of Se is preferably kept as low as is compatible with getting a satisfactory neutral colour. We find it possible to operate satisfactorily at iess than 5 ppm Se at visible transmissions greater than 60%.

Per the purpose cf the present specification and claims, references to visible light transmission are to light transmission (LT) measured using CIE Illuminant A; references to UVT are reference to transmissions measured in accordance with the international ISO 9050 standard over the wavelength range 280 to 380 nm; references to direct solar heat transmission (DSHT) are references to solar heat transmission integrated over the wavelength range 350 to 2100 nm according to the relative solar spectral distribution Parry Moon for air mass 2; total solar heat transmission (TSHT) equals DSHT plus the solar heat that is absorbed and reradiated in the forward direction.

Within the general scope of the present invention, there are a number of different types of compositions which are of particular interest.

Thus, in a preferred aspect of the present invention, there is provided a glass having a visible light transmission of up to 60%, a total iron content expressed as $Fe_2O_3$ of at least 0.7% and a combination of $Co_3O_4$, NiO and Se as colourants.

The use of nickel as a colourant is somewhat suprising. It is well-known in glass-making that the presence of nickel tends to lead to NiS inclusions in the glass which tend to cause the glass to shatter during tempering. Moreover, glass compositions containing nickel tend to change colour during tempering, particularly bending. For this reason, most prior art in this field tends to the view that the use of nickel should be avoided. For reasons which are not fully understood at the present time, we have found that we are able to use nickel in relatively large quantities, up to 275 parts by million by weight without these problems occurring.

The use of nickel does have some surprising advantages. Firstly, if a series of nickel-containing glasses are being made, there is an easy phase-in from melt to melt. In other words, the amount of nickel being used can be changed without large quantities of wasted glass containing unwanted nickel levels being produced. Furthermore, the use of selenium as a colourant causes problems. It is both volatile and poisonous and the chemical retention thereof in glass is difficult to achieve. In fact, as much as 90% of the selenium introduced into the melt may be discharged unchanged in the exit gases. In addition to its poisonous nature, selenium has a further environmentally-unfriendly characteristic in that it has a foul smell, generally likened to rotting cabbages. It is also well known that the more selenium which is added to a glass melt, the more which proportionately disappears. By using nickel in combination with small quantities of selenium, we have found that we can obtain substantially the same colour tints as were previously obtained using larger quantities of selenium in the absence of nickel. In so doing, we are obviously minimising the adverse environmental effects associated with the use of selenium.

In a different preferred aspect of the present invention, there is provided a glass having a visible light transmission of at least 60%, a total iron content expressed as $Fe_2O_3$ lying in the range of from about 0.25% to 0.77% by weight and wherein the colourant comprises at least one of $V_2O_5$, $CeO_2$, $TiO_2$, Se, $Co_3O_4$, NiO, SnO, $Nd_2O_3$ and MnO.

In such a case, it is desirable if the total iron content is a maximum of 0.3% by weight and the colourant comprises at least one member selected from the group consisting of $V_2O_5$, $CeO_2$ and $TiO_2$ in combination with at least one member selected from the group consisting of Se, $Co_3O_4$, NiO, $Nd_2O_3$ and MnO.

If the total iron content is at least 0.3% by weight, it is advantageous if the colourant comprises at least one member selected from the group consisting of Se, $Co_3O_4$, NiO, $Nd_2O_3$ and MnO. At least one member of the Group consisting of $V_2O_5$, $CeO_2$ and $TiO_2$ may also be added if desired.

Such glass compositions are also surprising and are extremely useful. This is particularly true if the light transmission is in excess of 70% because, at the current time, this represents the minimal permissible light transmission for the windscreens of vehicles. As previously mentioned, most glasses having the desired IR, visible light and UV transmission characteristics are coloured green. Moreoever, glasses having a high iron content usually have a low light transmission. We have surprisingly found that the green colouration can be easily varied by the use of minimal amounts of other colourants, and selenium in particular, is more optically active, particularly if a high proportion of the iron present is in the ferrous form. The high ferrous content means that small differences of the order of only one or two parts per million of the other colourant(s) can make a substantial difference to the colour of the glass.

Reference should now be made to the accompanying drawing, the single Figure of which is a plot of transmission ( UV heat and light) against FeO content for a series of grey glasses showing the improvement in properties that can be achieved, in accordance with the invention, by increasing the FeO content of a known glass (glass 1) while incorporating colourants, as taught in the present invention, to maintain a neutral tint. Glass 1 is commercially available grey glass with a DSHT similar to its light transmission and a UV transmission about 40%. In glasses 2, 3 and 4 the amount of ferrous ion has been increased which, without compensating changes, would normally turn the glass blue and significantly reduce light transmission. The UV transmission has also been reduced which would normally introduce a greenness to the blue glass. Tne light transmission and neutrality of the glass have in fact been maintained by a balance of cobalt, neodymium, and selenium additions while controlling the ferrous/ferric ratio.

Selenium introduces a pink component to the colour of the glass, thus complementing any blue in the glass to produce a more neutral colour. However, selenium also has colourless forms in oxidised glasses whilst reduced glasses are assumed to contain brown or colourless polyselenides. The oxidation/reduction of the glass must therefore be carefully controlled to retain selenium in the coloured pink form.

Selenium retention is at a maximum at about 20% ferrous/ferric ratio and is siginificantly reduced below 10% ferrous/ferric or above 40% ferrous/ferric. In glasses using selenium as a neutralising agent the ferrous/ferric ratio should be between 10 and 40% for the best efficiency of retaining selenium in the coloured form.

Although cobalt in itself colours glass blue, it is useful as a colour neutralising agent because its absorptions are in the red end of the visible spectrum and can therefore be useful in counteracting the effect of reduced iron absorption in the infra red at 1050 nm.

Neodymium oxide is also useful in a similar way but is a better neutraliser than cobalt since it is dichroic and produces a blue and pink colouration depending on the kind of light in which it is viewed. However, neodymium oxide is expensive and cobalt in combination with selenium is preferred as a neutralising agent.

For glasses with a DSHT at least 7% points lower than the visible light transmission and a UV transmission of less than 25% in 4 mm path length, the following combination of additives is required.
Total iron expressed as $Fe_2O_3$ in the range 0,25-1.75%, usually 0.25-1.25%.
The minimum FeO content to provide the necessary DSHT varies with optical density according to the equation

$$\% \, FeO \geq 0.007 + \frac{(\text{optical density - 0.036})}{2.3}$$

where optical density = $\log_{10} T/_{100}$
where T is the visibie light transmission in percent for 4 mm glass.
This roughly equates to:-

| Light Transmission | Minimum FeO Content |
| --- | --- |
| 80% | 0.033% |
| 70% | 0.058% |
| 60% | 0.087% |
| 50% | 0.122% |
| 40% | 0.153% |
| 30% | 0.218% |

Ultraviolet absorption will be provided by iron oxide in the $Fe^{3+}$ state, optionally supplemented by $V_2O_5$ and/or $CeO_2$ and/or $TiO_2$. For most tints, a UV transmission of less than 25% is met simply by ferric iron. However, where the ferric iron is less than 0.3% expressed as $Fe_2O_3$, the UV transmission may be reduced below 25% by additions of:-
0.1 - 1.0 $CeO_2$ (if vanadium is absent)
0.05 - 0.2 $V_2O_5$ (if cerium is absent)

Many of the glasses contain at least 0.3% ferric iron expressed as $Fe_2O_3$ and in addition have quantities of $CeO_2$ and $V_2O_5$ to provide enhanced UV protection.

Preferably the DSHT shall be at least 10% points lower than the visible light transmission; the minimum FeO content of the glass to meet this preferred condition is given by

$$\% FeO \geq 0.012 + \frac{(\text{optical density - 0.036})}{1.84}$$

This roughly equates to:

| Light Transmission | Minimum FeO Content |
|---|---|
| 80% | 0.045% |
| 70% | 0.076% |
| 60% | 0.113% |
| 50% | 0.156% |
| 40% | 0.208% |
| 30% | 0.276% |

For the most neutral tints the ferrous/ferric ratio shall not be less than 10% and preferably not less than 18%.

A required tint may be achieved by adding one or more of Se, $Co_3O_4$, $Nd_2O_3$, NiO, MnO, CuO and SnO. The quantities of colourant and the colourant chosen to decolourise depends on the depth of tint required and the following guide lines are given.

Se up to 50 parts per million chemical Se retained

$Co_3O_4$ up to 200 parts per million

$Nd_2O_3$ up to 2.5% by weight

Manganese oxide may also be added to the glass to provide pinkness due to the presence of the $Mn^{3+}$ ion but it is preferably limited to a maximum of 1% by weight because of the danger of colour changes caused by solarisation. Similarly, cerium and vanadium oxide ultra violet absorbers in the same glass must be carefully used because of the possibility of colour changes by solarisation.

Other components which may be present in glasses in accordance with the invention include copper oxide, CuO typically in an amount up to 0.1% by weight, which in certain conditions may reduce solar heat transmission.

The glasses in accordance with the invention are useful for both architectural and automotive purposes, and the invention also provides windows composed of glass in accordance with the invention. The automotive windows may be not only windscreens, but also the remaining windows of a car. These can eg include rear side windows with visible light transmissions as low as 30% and a rear screen as low as 30%.

The Examples, except Example 1 which is for comparison purposes only, illustrate but do not limit the invention. In the Examples, all parts and percentages are by weight and:

(a) $Fe_2O_3$, FeO, $Nd_2O_3$, $CeO_2$, $TiO_2$, $V_2O_5$, SnO and MnO are expressed in percent; Se, $Co_3O_4$, and NiO are expressed in parts per million;

(b) total iron is expressed as if all iron present were present as ferric oxide;

(c) percentage of total iron as $Fe^{2+}$ is calculated from the spectral curve of the glass using the equation:-

$$\%Fe^{2+} = \frac{115.2 \, (OD_{1000} - 0.036)}{t \times Fe_2O_3}$$

where $OD_{1000}$ = optical density of the glass at 1000 nm wavelength

t = glass thickness in millimetres

$Fe_2O_3$ = percentage total iron, expressed as $Fe_2O_3$, in the glass; and

(d) the FeO content is calculated from the equation

$$\%FeO = \frac{\%Fe^{2+}}{100} \times Fe_2O_3 \times \frac{143.7}{159.7}$$

$Fe_2O_3$ = percentage total iron, expressed as $Fe_2O_3$, in the glass

(143.7 being the molecular weight of 2 x FeO and

159.7 being the molecular weight of $Fe_2O_3$).

Examples

| | Total iron as $Fe_2O_3$ % | FeO % | % of total iron as $Fe^{2+}$ | Se | $Co_3O_4$ | $Nd_2O_3$ | $CeO_2$ | $TiO_2$ | $V_2O_5$ | Other |
|---|---|---|---|---|---|---|---|---|---|---|
| | | | | | CHEMICAL ADDITIVES | | | | | |
| 1 | 0.25 | 0.043 | 18% | 11 | 41 | - | - | - | - | - |
| 2 | 0.35 | 0.082 | 26% | 3 | 32 | 0.15 | 0.4 | - | - | - |
| 3 | 0.38 | 0.078 | 23% | 5 | 32 | - | 0.34 | - | - | - |
| 4 | 0.38 | 0.099 | 29% | 2 | 32 | - | 0.4 | - | - | - |
| 5 | 0.25 | 0.038 | 17% | 9 | - | - | - | - | 0.1 | - |
| 6 | 0.25 | 0.065 | 29% | 3 | - | - | - | - | 0.1 | - |
| 7 | 0.34 | 0.098 | 32% | <2 | 32 | - | 0.4 | - | - | - |
| 8 | 0.45 | 0.030 | 7.5% | 24 | 18 | - | 0.4 | - | - | - |
| 9 | 0.45 | 0.093 | 23% | 5 | 38 | - | 0.4 | - | - | - |
| 10 | 0.45 | 0.142 | 35% | <2 | 38 | - | 0.4 | - | - | - |
| 11 | 0.45 | 0.154 | 38% | <2 | 38 | - | 0.4 | - | - | - |
| 12 | 0.45 | 0.117 | 29% | <2 | - | 0.2 | 0.4 | - | - | - |
| 13 | 0.45 | 0.126 | 31% | <2 | - | 0.5 | 0.4 | - | - | - |
| 14 | 0.45 | 0.122 | 30% | <2 | - | 0.3 | 0.4 | - | - | - |
| 15 | 0.45 | 0.142 | 35% | <2 | 38 | - | 0.5 | 0.25 | - | - |
| 16 | 0.45 | 0.134 | 33% | <2 | - | - | 0.4 | 0.2 | - | - |
| 17 | 0.45 | 0.142 | 35% | <2 | - | 0.3 | 0.4 | - | - | NiO 100ppm |
| 18 | 0.45 | 0.146 | 36% | 5 | - | 0.3 | 0.4 | - | - | - |
| 19 | 0.45 | 0.130 | 32% | 16 | 25 | - | 0.4 | - | - | - |
| 20 | 0.4 | 0.104 | 29% | 8 | 30 | - | 0.4 | - | - | - |
| 21 | 0.45 | 0.150 | 37% | 10 | 38 | - | 0.4 | - | - | SnO 1.0 |
| 22 | 0.4 | 0.097 | 27% | 4 | 18 | - | - | - | 0.1 | - |
| 23 | 0.6 | 0.124 | 23% | <2 | 20 | - | 0.2 | - | - | - |
| 24 | 0.7 | 0.088 | 14% | <2 | - | 0.7 | 1.0 | - | - | - |
| 25 | 0.7 | 0.157 | 25% | 7 | 38 | - | - | - | - | - |
| 26 | 0.77 | 0.090 | 13% | - | - | 0.5 | 1.0 | 0.5 | - | - |
| 27 | 0.5 | 0.122 | 27% | 12 | 76 | - | 0.1 | - | - | - |
| 28 | 0.45 | 0.146 | 36% | 7 | 80 | - | - | - | - | - |
| 29 | 0.675 | 0.213 | 35% | 9 | 57 | - | - | - | - | - |
| 30 | 1.23 | 0.443 | 40% | 11 | 104 | - | - | - | - | - |
| 31 | 0.675 | 0.182 | 30% | 14 | 57 | - | - | - | - | - |
| 32 | 0.7 | 0.227 | 36% | 20 | 80 | - | - | - | - | - |
| 33 | 0.7 | 0.227 | 36% | 20 | 120 | - | - | - | - | - |
| 34 | 0.7 | 0.258 | 41% | 16 | 120 | - | - | - | - | - |
| 35 | 0.675 | 0.249 | 41% | 3 | 57 | - | 0.2 | 1.0 | - | - |
| 36 | 0.9 | 0.300 | 37% | 10 | 20 | - | - | - | - | - |
| 37 | 0.7 | 0.290 | 46% | 11 | Zero | 2.0 | - | - | - | - |
| 38 | 0.8 | 0.209 | 29% | 24 | 81 | - | - | - | - | - |
| 39 | 1.0 | 0.225 | 25% | 14 | 150 | - | - | - | - | - |
| 40 | 0.6 | 0.086 | 16% | - | 20 | - | 0.4 | - | - | $MnO_2$ 1.0 |
| 41 | 0.6 | 0.162 | 30% | <2 | 20 | 0.1 | - | - | - | - |

(continued)

| | Total iron as Fe$_2$O$_3$ % | FeO % | % of total iron as Fe2+ | Se | Co$_3$O$_4$ | Nd$_2$O$_3$ | CeO$_2$ | TiO$_2$ | V$_2$O$_5$ | Other |
|---|---|---|---|---|---|---|---|---|---|---|
| 42 | 0.7 | 0.258 | 41% | 15 | 120 | - | - | - | - | NiO 275ppm |
| 43 | 1.0 | 0.315 | 35% | 9 | 20 | - | - | - | - | - |
| 44 | 1.23 | 0.277 | 25% | 12 | 104 | - | - | - | - | - |
| 45 | 1.40 | 0.252 | 20% | 10 | 104 | - | - | - | - | - |
| 46 | 1.30 | 0.257 | 22% | 5 | 130 | - | - | - | - | NiO 131 ppm |
| 47 | 0.9 | 0.186 | 23% | 6 | 65 | - | - | - | - | NiO 65 ppm |
| 48 | 1.1 | 0.346 | 35% | 13 | 105 | - | - | - | - | NiO 131 ppm |
| 49 | 0.8 | 0.173 | 24% | 12 | 30 | 0.5 | - | - | - | - |
| 50 | 0.6 | 0.167 | 31% | 11 | 30 | 0.5 | - | - | - | - |
| 51 | 0.6 | 0.157 | 29% | 17 | 80 | 1.0 | - | - | - | - |
| 52 | 0.45 | 0.146 | 36% | 7 | 80 | - | - | - | 0.05 | - |
| 53 | 0.6 | 0.119 | 22% | 20 | - | 1.0 | - | - | - | - |

| TRANSMISSION COLOUR | | | | | | | |
|---|---|---|---|---|---|---|---|
| | LT | DSHT | UVT | a* | b* | Dominant wavelength λD | Colour Purity |
| 1 | 70 | 70 | 40 | -0.3 | 1.1 | 454 | 2.1% |
| 2 | 69 | 61 | 23 | -1.9 | -1.4 | 485 | 2.7% |
| 3 | 68 | 59 | 21 | -0.8 | +2.0 | 570 | 1.2% |
| 4 | 68 | 56 | 22 | -2.4 | -0.6 | 489 | 2.2% |
| 5 | 82 | 75 | 17 | -2.2 | +4.9 | 569 | 3.9% |
| 6 | 80 | 69 | 23 | -4.5 | +4.5 | 558 | 3.1% |
| 7 | 73 | 59 | 25 | -3.5 | -3.2 | 486 | 4.9% |
| 8 | 80 | 72 | 23 | -1.4 | +1.6 | 547 | 0.5% |
| 9 | 64 | 55 | 20 | -1.4 | +1.5 | 547 | 0.6% |
| 10 | 64 | 48 | 22 | -3.7 | -1.9 | 488 | 4.0% |
| 11 | 64 | 46 | 23 | -4.9 | -3.8 | 487 | 6.1% |
| 12 | 72 | 54 | 20 | -3.0 | +2.2 | 530 | 0.9% |
| 13 | 71 | 55 | 22 | -4.0 | -1.6 | 489 | 3.9% |
| 14 | 73 | 56 | 22 | -3.4 | +0.6 | 495 | 1.7% |
| 15 | 64 | 47 | 17 | -4.3 | -0.6 | 492 | 3,1% |
| 16 | 74 | 52 | 20 | -4.6 | +3.0 | 534 | 1.6% |
| 17 | 67 | 49 | 22 | -4.5 | +2.3 | 515 | 1.3% |
| 18 | 65 | 47 | 18 | -2.3 | +3.7 | 564 | 2.8% |
| 19 | 57 | 46 | 15 | +1.0 | +9.0 | 553 | 3.0% |
| 20 | 64 | 54 | 20 | -0.3 | +3.8 | 576 | 3.4% |
| 21 | 60 | 47 | 19 | -1.9 | +2.1 | 553 | 1.1% |
| 22 | 69 | 57 | 18 | -4.7 | +4.3 | 553 | 3.0% |
| 23 | 71 | 54 | 22 | -3.8 | +1.0 | 499 | 1.5% |
| 24 | 67 | 58 | 11 | -2.0 | +3.7 | 566 | 2.7% |
| 25 | 61 | 45 | 21 | -4.4 | +0.5 | 493 | 3.3% |
| 26 | 73 | 60 | 8 | -5.7 | +3.9 | 536 | 2.2% |

(continued)

| | LT | DSHT | UVT | a* | b* | Dominant wavelength λD | Colour Purity |
|---|---|---|---|---|---|---|---|
| | | | | | | TRANSMISSION COLOUR | |
| 27 | 48 | 41 | 18 | -0.8 | +1.1 | 552 | 0.4% |
| 28 | 51 | 42 | 22 | -3.8 | -2.1 | 488 | 4.5% |
| 29 | 50 | 35 | 20 | -4.0 | -0.2 | 493 | 2.8% |
| 30 | 30 | 16 | 9 | -8.8 | -4.1 | 489 | 10.3% |
| 31 | 49 | 36 | 17 | -2.5 | +2.5 | 553 | 1.7% |
| 32 | 39 | 29 | 13 | -0.7 | +4.9 | 574 | 5.6% |
| 33 | 33 | 25 | 12 | -1.0 | +0.9 | 511 | 0.3% |
| 34 | 37 | 27 | 16 | -3.3 | -4.3 | 484 | 6.9% |
| 35 | 54 | 36 | 15 | -7.4 | -1.3 | 492 | 5.5% |
| 36 | 51 | 29 | 16 | -6.6 | +3.3 | 521 | 2.1% |
| 37 | 40 | 28 | 15 | -3.5 | -3.4 | 486 | 6.0% |
| 38 | 36 | 27 | 9 | +0.6 | +8.4 | 578 | 10.9% |
| 39 | 33 | 26 | | -3.9 | -5.0 | 485 | 8.3% |
| 40 | 75 | 60 | 13 | -6.0 | +4.4 | 543 | 2.7% |
| 41 | 69 | 49 | 23 | -5.8 | -2.5 | 489 | 5.4% |
| 42 | 34 | 25 | 17 | -4.0 | +1.4 | 504 | 1.7% |
| 43 | 52 | 28 | 15 | -9.5 | +0.3 | 496 | 5.3% |
| 44 | 36 | 24 | 7 | -5.7 | +0.4 | 496 | 3.6% |
| 45 | 39 | 27 | 5 | -7.4 | +0.1 | 496 | 4.7% |
| 46 | 35 | 25 | 7 | -7.8 | -1.0 | 493 | 6.3% |
| 47 | 53 | 38 | 16 | -6.7 | -1.2 | 492 | 5.1% |
| 48 | 32 | 20 | 9 | -7.2 | +0.8 | 498 | 4.3% |
| 49 | 38 | 26 | 8 | -3.5 | +5.0 | 563 | 4.9% |
| 50 | 41 | 28 | 13 | -3.4 | +1.2 | 501 | 1.6% |
| 51 | 35 | 27 | 9 | -0.5 | +4.6 | 575 | 5.4% |
| 52 | 51 | 42 | 22 | -3.8 | -2.1 | 487 | 4.5% |
| 53 | 40 | 33 | 8 | +2.4 | +10.0 | 581 | 13% |

Several of the examples given are suitable as high performance architectural glasses for buildings because of their superb infra-red and UV absorbance combined with neutrality of colour. The properties of architectural glasses are often quoted in 6 mm path length and the Total Solar Heat Transmission (TSHT) is quoted in addition to the DSHT. Some examples particularly suitable for architectural use are as follows:-

| Transmission in 6 mm path length | | | | |
|---|---|---|---|---|
| Example | Light Transmission | DSHT | TSHT | UVT |
| 3 | 58% | 48% | 60% | 15% |
| 7 | 65% | 48% | 60% | 20% |
| 11 | 55% | 36% | 51% | 17% |
| 13 | 63% | 44% | 57% | 16% |
| 14 | 65% | 44% | 57% | 16% |
| 23 | 63% | 44% | 57% | 16% |

**Claims**

1. An IR and UV absorbing soda lime silica glass of a neutral tint (as herein defined) having a ferrous iron content calculated from the equation:-

$$\% \text{ by weight FeO} \geq 0.007 + \frac{(\text{Optical density} - 0.036)}{2.3}$$

and a total iron content expressed as $Fe_2O_3$ in the range 0.25 - 1.75% by weight,

the glass having been tinted to a neutral colour by one or more of Se, $Co_3O_4$, $Nd_2O_3$, NiO, MnO, $V_2O_5$, CeO2, $TiO_2$, CuO and SnO,

the glass having, in a 4 mm thickness, a visible light transmission of at least 32%, a UV transmission not greater than 25%, and a direct solar heat transmission at least 7 percentage points below the visible light transmission, and having a dominant wavelength preferably less than 570 nm,

provided that, when the dominant wavelength is above 570 nm and the visible light transmission is greater than 60%, the colour purity is not greater than 4,

and when Se is present, at least one other colourant selected from $Co_3O_4$, $Nd_2O_3$, NiO, MnO, CuO, SnO, $V_2O_5$, $CeO_2$ or $TiO_2$ is present in an amount by weight at least 1.5 times the amount of Se present.

2. A glass as claimed in claim 1 having a visible light transmission of up to 60%, a total iron content expressed as $Fe_2O_3$ of at least 0.7% and a combination of $Co_3O_4$, NiO and Se as colourants.

3. A glass as claimed in claim 1 having a visible light transmission of at least 60%, a total iron content expressed as $Fe_2O_3$ lying in the range of from about 0.25% to 0.77% by weight and wherein the colourant comprises at least one of $V_2O_5$, $CeO_2$, $TiO_2$, Se, $Co_3O_4$, NiO, SnO, $Nd_2O_3$ and MnO.

4. A glass as claimed in claim 3 wherein the total iron content is a maximum of 0.3% by weight and the colourant comprises at least one member selected from the group consisting of $V_2O_5$, $CeO_2$ and $TiO_2$ in combination with at least one member selected from the group consisting of Se, $Co_3O_4$, NiO, $Nd_2O_3$ and MnO.

5. A glass as claimed in claim 3 wherein the total iron content is at least 0.3% by weight and the colourant comprises at least one member selected from the group consisting of Se, $Co_3O_4$, NiO, $Nd_2O_3$ and MnO.

6. A glass as claimed in claim 1 wherein the colourants comprise a mixture of at least three members of the group consisting of Se, $Co_3O_4$, $Nd_2O_3$, $CeO_2$, $TiO_2$, $V_2O_5$, NiO, MnO, SnO and CuO.

7. A glass as claimed in claim 6 wherein at least one of the three colourants is selected from the sub-group consisting of $V_2O_5$, $CeO_2$ and $TiO_2$ and at least one of the other colourants is selected from the sub-group consisting of Se, $Co_3O_4$, $Nd_2O_3$, NiO, MnO, SnO and CuO.

8. A glass as claimed in any one of claims 3 to 7 wherein $Nd_2O_3$ is present in an amount of up to 2.5% by weight.

9. A glass as claimed in any one of claims 3 to 7 wherein MnO is present in an amount of up to 1% by weight.

10. A glass as claimed in any one of claims to 7 wherein $CeO_2$ is present in an amount of from about 0.1% to 1% by weight.

11. A glass as claimed in any one of claims 3 to 7 wherein $V_2O_5$ is present in an amount of from 0.05% to 0.2% by weight.

12. A glass as claimed in any one of claims 2 to 7 wherein Se is present in an amount of up to 50 parts per million by weight.

13. A glass as claimed in any one of claims 2 to 7 wherein $Co_3O_4$ is present in an amount of up to 200 parts per million by weight.

14. A glass as claimed in any one of claims 2 to 7 wherein NiO is present in an amount of up to 275 parts per million by weight.

15. A glass as claimed in claim 2 containing up to 275 parts per million by weight NiO, up to 15 parts per million by weight Se and up to 130 parts per million by weight $Co_3O_4$.

16. A glass as claimed in claim 3 wherein Se is present in an amount of up to 5 parts per million by weight.

17. A glass as claimed in claim 1 having a visible light transmission of up to 60%, a total iron content expressed as $Fe_2O_3$ of at least 0.8% by weight and a combination of $Co_3O_4$ and Se as colourants.

18. A glass as claimed in claim 17 wherein the $Co_3O_4$ is present in an amount of up to 150 parts per million by weight and Se is present in an amount of up to 15 parts per million by weight.

19. A glass as claimed in any preceding claim having a ferrous content of at least 18% of the total iron.

20. An IR and UV absorbing glass as claimed in any preceding claim having, in 4 mm thickness, a direct solar heat transmission at least 10 percentage points below its visible light transmission.

21. An IR and UV absorbing glass as claimed in claim 1 having, in 4 mm thickness, a dominant wavelength above 570 nm, a visible light transmission greater than 60% and a colour purity less than 2.

22. An IR and UV absorbing glass as claimed in any preceding claim containing Se and at least one other colourant selected from $Co_3O_4$, $Nd_2O_3$, NiO and MnO in an amount by weight which is at least twice the amount of Se present.

23. An IR and UV absorbing glass according to any of the preceding claims in sheet form.

24. A window composed of glass according to any of the preceding claims.

25. An automotive window composed of glass according to any of the preceding claims.

**Patentansprüche**

1. IR- und UV-absorbierendes Natron-Kalk-Kieselsäureglas neutraler Färbung (wie nachfolgend definiert) mit einem Eisen(II)-Gehalt, der nach der folgenden Gleichung berechnet ist:

$$\text{Gew.-\% FeO} \geq 0{,}007 + \frac{(\text{optische Dichte - } 0{,}036)}{2.3}$$

und einem Gesamteisengehalt, ausgedrückt als $Fe_2O_3$, im Bereich von 0,25 bis 1,75 Gew.-%,
wobei das Glas auf eine neutrale Farbe gefärbt ist durch einen oder mehrere Stoffe aus der Gruppe Se, $Co_3O_4$, $Nd_2O_3$, NiO, MnO, $V_2O_5$, $CeO_2$, $TiO_2$, CuO und SnO,
das Glas in einer Dicke von 4 mm eine Durchlässigkeit für sichtbares Licht von mindestens 32%, eine UV-Durchlässigkeit von nicht mehr als 25% und eine direkte Sonnenwärmedurchlässigkeit von mindestens 7 Prozentpunkten unterhalb der sichtbaren Lichtdurchlässigkeit und eine dominierende Wellenlänge vorzugsweise unterhalb 570 nm besitzt, vorausgesetzt daß, wenn die dominierende Wellenlänge oberhalb 570 nm liegt und die sichtbare Lichtdurchlässigkeit größer ist als 60%, die Farbreinheit nicht höher liegt als 4, und
wenn Se enthalten ist, wenigstens ein anderes Färbemittel, das aus $Co_3O_4$, $Nd_2O_3$, NiO, MnO, CuO, SnO, $V_2O_5$, $CeO_2$ oder $TiO_2$ gewählt ist, in einer auf Gewichtsprozent bezogenen Menge von mindestens dem 1,5-fachen der Menge des enthaltenen Se enthalten ist.

2. Glas nach Anspruch 1, mit einer Durchlässigkeit für sichtbares Licht bis zu 60%, einem Gesamteisengehalt, ausgedrückt als $Fe_2O_3$, von mindestens 0,7% und einer Kombination von $Co_3O_4$, NiO und Se als Färbemittel.

3. Glas nach Anspruch 1, mit einer Durchlässigkeit für sichtbares Licht von mindestens 60%, einem Gesamteisengehalt, ausgedrückt als $Fe_2O_3$, der im Bereich von etwa 0,25 bis 0,77 Gew.-% liegt, wobei das Färbemittel aus wenigstens einem aus der Gruppe $V_2O_5$, $CeO_2$, $TiO_2$, Se, $Co_3O_4$, NiO, SnO, $Nd_2O_3$ und MnO besteht.

4. Glas nach Anspruch 3, bei welchem der Gesamteisengehalt maximal 0,3 Gew.-% beträgt und das Färbemittel wenigstens einen Bestandteil aufweist, der aus der Gruppe ausgewählt ist, die aus $V_2O_5$, $CeO_2$ und $TiO_2$ besteht, in Kombination mit mindestens einem Bestandteil, der aus der Gruppe gewählt ist, die aus Se, $Co_3O_4$, NiO, $Nd_2O_3$ und MnO besteht.

5. Glas nach Anspruch 3, bei welchem der Gesamteisengehalt mindestens 0,3 Gew.-% beträgt und das Färbemittel wenigstens einen Bestandteil enthält, der aus der Gruppe ausgewählt ist, die aus Se, $Co_3O_4$, NiO, $Nd_2O_3$ und

MnO besteht.

**6.** Glas nach Anspruch 1, bei welchem die Färbemittel eine Mischung von wenigstens drei Bestandteilen aus der Gruppe aufweisen, die aus Se, $Co_3O_4$, $Nd_2O_3$, $CeO_2$, $TiO_2$, $V_2O_5$, NiO, MnO,SnO und CuO besteht.

**7.** Glas nach Anspruch 6, bei welchem wenigstens eines der drei Färbemittel aus der Untergruppe gewählt ist, die aus $V_2O_5$, $CeO_2$ und $TiO_2$ besteht, und wenigstens eines der anderen Färbemittel aus der Untergruppe gewählt ist, welche aus Se, $Co_3O_4$, $Nd_2O_3$, NiO, MnO, SnO und CuO besteht.

**8.** Glas nach einem der Ansprüche 3 bis 7, bei welchem $Nd_2O_3$ in einer Menge von bis zu 2,5 Gew.-% enthalten ist.

**9.** Glas nach einem der Ansprüche 3 bis 7, bei welchem MnO in einer Menge von bis zu 1 Gew.-% enthalten ist.

**10.** Glas nach einem der Ansprüche 3 bis 7, bei welchem $CeO_2$ in einer Menge von etwa 0,1 bis 1 Gew.-% enthalten ist.

**11.** Glas nach einem der Ansprüche 3 bis 7, bei welchem $V_2O_5$ in einer Menge von 0,05 bis 0,2 Gew.-% enthalten ist.

**12.** Glas nach einem der Ansprüche 2 bis 7, bei welchem Se in einer Menge von bis zu 50 Gewichtsteilen je Million enthalten ist.

**13.** Glas nach einem der Ansprüche 2 bis 7, bei welchem $Co_3O_4$ in einem Betrag von bis zu 200 Gewichtsteilen je Million enthalten ist.

**14.** Glas nach einem der Ansprüche 2 bis 7, bei welchem NiO in einer Menge von bis zu 250 Gewichtsteilen je Million enthalten ist.

**15.** Glas nach Anspruch 2, welches bis zu 275 Gewichtsteile je Million NiO, bis zu 15 Gewichtsteile je Million Se und bis zu 130 Gewichtsteile je Million $Co_3O_4$ enthält.

**16.** Glas nach Anspruch 3, bei welchem Se in einer Menge von bis zu 5 Gewichtsteilen je Million enthalten ist.

**17.** Glas nach Anspruch 1, mit einer Durchlässigkeit für sichtbares Licht von bis zu 60%, einem Gesamteisengehalt, ausgedrückt als $Fe_2O_3$, von mindestens 0,8 Gew.-% und einer Kombination von $Co_3O_4$ und Se als Färbemittel.

**18.** Glas nach Anspruch 17, bei welchem das $Co_3O_4$ in einer Menge von bis zu 150 Gewichtsteilen je Million und Se in einer Menge bis zu 15 Gewichtsteilen je Million enthalten ist.

**19.** Glas nach einem der vorangehenden Ansprüche, mit einem Eisen(II)-Gehalt von wenigstens 18% des Gesamteisengehalts.

**20.** IR- und UV-absorbierendes Glas nach einem der vorangehenden Ansprüche, das in einer Dicke von 4 mm direkte Sonnenwärmedurchlässigkeit von mindestens 10 Prozentpunkten unterhalb seiner Durchlässigkeit für sichtbares Licht aufweist.

**21.** IR- und UV-absorbierendes Glas nach Anspruch 1, das in einer Dicke von 4 mm eine dominierende Wellenlänge oberhalb 570 nm, eine Durchlässigkeit für sichtbares Licht von mehr als 60% und eine Farbreinheit von weniger als 2 aufweist.

**22.** IR- und UV-absorbierendes Glas nach einem der vorangehenden Ansprüche, das Se und wenigstens ein anderes Färbemittel enthält, das aus $Co_3O_4$, $Nd_2O_3$ NiO und MnO in einer Gewichtsmenge ausgewählt ist, die wenigstens das zweifache der Menge des enthaltenen Se ist.

**23.** IR- und UV-absorbierendes Glas nach einem der vorangehenden Ansprüche in Scheibenform.

**24.** Fenster, das aus einem Glas nach einem der vorangehenden Ansprüche besteht.

**25.** Kraftfahrzeugfenster, das aus einem Glas nach einem der vorangehenden Ansprüche besteht.

**Revendications**

1. Verre de silice-soude-chaux absorbant les I.R. et les U.V. d'une teinte neutre (telle que définie ici) ayant une teneur en fer ferreux calculée à partir de l'équation :

$$\% \text{ en poids de FeO} \geq 0,007 + \frac{(\text{Densité optique - 0,036})}{2,3}$$

et une teneur totale en fer exprimée par $Fe_2O_3$ dans la plage de 0,25 à 1,75 % en poids,
le verre ayant été teinté en une couleur neutre par un ou plusieurs éléments parmi Se, $Co_3O_4$, $Nd_2O_3$, NiO, MnO, $V_2O_5$, $CeO_2$, $TiO_2$, CuO et SnO,
le verre ayant, à une épaisseur de 4 mm, une transmission de la lumière visible d'au moins 32 %, une transmission des U.V. n'excédant pas 25 %, et une transmission de la chaleur solaire directe d'au moins 7 points de pourcentage de moins que la transmission de la lumière visible, et ayant une longueur d'onde dominante de préférence inférieure à 570 nm, pourvu que, lorsque la longueur d'onde dominante est supérieure à 570 nm et la transmission de la lumière visible est supérieure à 60 %, la pureté de la couleur ne dépasse pas 4, et lorsque Se est présent, au moins un autre colorant sélectionné parmi $Co_3O_4$, $Nd_2O_3$, NiO, MnO, CuO, SnO, $V_2O_5$, $CeO_2$ ou $TiO_2$ est présent en une quantité en poids d'au moins 1,5 fois la quantité de Se présent.

2. Verre selon la revendication 1, ayant une transmission de la lumière visible pouvant atteindre 60 %, une teneur en fer totale exprimée par $Fe_2O_3$ d'au moins 0,7 % et une combinaison de $Co_3O_4$, NiO et Se comme colorants.

3. Verre selon la revendication 1, ayant une transmission de la lumière visible d'au moins 60 %, une teneur en fer totale exprimée par $Fe_2O_3$ se situant dans la plage d'environ 0,25 % à 0,77 % en poids et dans lequel le colorant comprend au moins un élément parmi $V_2O_5$, $CeO_2$, $TiO_2$, Se, $Co_3O_4$, NiO, SnO, $Nd_2O_3$ et MnO.

4. Verre selon la revendication 3, dans lequel la teneur en fer totale est au plus de 0,3 % en poids et le colorant comprend au moins un élément sélectionné parmi le groupe consistant en $V_2O_5$, $CeO_2$ et $TiO_2$ en combinaison avec au moins un élément sélectionné parmi le groupe consistant en Se, $Co_3O_4$, NiO, $Nd_2O_3$ et MnO.

5. Verre selon la revendication 3, dans lequel la teneur en fer totale est d'au moins 0,3 % en poids et le colorant comprend au moins un élément sélectionné dans le groupe consistant en Se, $Co_3O_4$, NiO, $Nd_2O_3$ et MnO.

6. Verre selon la revendication 1, dans lequel les colorants comprennent un mélange d'au moins trois éléments du groupe consistant en Se, $Co_3O_4$, $Nd_2O_3$, $CeO_2$, $TiO_2$, $V_2O_5$, NiO, MnO, SnO et CuO.

7. Verre selon la revendication 6, dans lequel au moins un des trois colorants est sélectionné dans le sous-groupe consistant en $V_2O_5$, $CeO_2$ et $TiO_2$ et au moins un des autres colorants est sélectionné dans le sous-groupe consistant en Se, $Co_3O_4$, $Nd_2O_3$, NiO, MnO, SnO et CuO.

8. Verre selon l'une quelconque des revendications 3 à 7, dans lequel $Nd_2O_3$ est présent en une quantité pouvant atteindre 2,5 % en poids.

9. Verre selon l'une quelconque des revendications 3 à 7, dans lequel MnO est présent en une quantité pouvant atteindre 1 % en poids.

10. Verre selon l'une quelconque des revendications 3 à 7, dans lequel $CeO_2$ est présent en une quantité d'environ 0,1 à 1 % en poids.

11. Verre selon l'une quelconque des revendications 3 à 7, dans lequel $V_2O_5$ est présent en une quantité de 0,05 à 0,2 % en poids.

12. Verre selon l'une quelconque des revendications 2 à 7, dans lequel Se est présent en une quantité pouvant atteindre 50 parties par million en poids.

13. Verre selon l'une quelconque des revendications 2 à 7, dans lequel $Co_3O_4$ est présent en une quantité pouvant atteindre 200 parties par million en poids.

**14.** Verre selon l'une quelconque des revendications 2 à 7, dans lequel NiO est présent en une quantité pouvant atteindre 275 parties par million en poids.

**15.** Verre selon la revendication 2, contenant jusqu'à 275 parties par million en poids de NiO, jusqu'à 15 parties par million en poids de Se et jusqu'à 130 parties par million en poids de $Co_3O_4$.

**16.** Verre selon la revendication 3, dans lequel Se est présent en une quantité pouvant atteindre 5 parties par million en poids.

**17.** Verre selon la revendication 1, ayant une transmission de la lumière visible pouvant atteindre 60 %, une teneur en fer totale exprimée par $Fe_2O_3$ d'au moins 0,8 % en poids et une combinaison de $Co_3O_4$ et Se comme colorants.

**18.** Verre selon la revendication 17, dans lequel $Co_3O_4$ est présent en une quantité pouvant atteindre 150 parties par million en poids et Se est présent en une quantité pouvant atteindre 15 parties par million en poids.

**19.** Verre selon l'une quelconque des revendications précédentes ayant une teneur en fer ferreux d'au moins 18 % du fer total.

**20.** Verre absorbant les I.R. et les U.V. selon l'une quelconque des revendications précédentes ayant, à 4 mm d'épaisseur, une transmission de la chaleur solaire directe d'au moins 10 points de pourcentage de moins que sa transmission de la lumière visible.

**21.** Verre absorbant les I.R. et les U.V. selon la revendication 1 ayant, à 4 mm d'épaisseur, une longueur d'onde dominante supérieure à 570 nm, une transmission de la lumière visible supérieure à 60 % et une pureté de couleur inférieure à 2.

**22.** Verre absorbant les I.R. et les U.V. selon l'une quelconque des revendications précédentes, contenant Se et au moins un autre colorant sélectionné parmi $Co_3O_4$, $Nd_2O_3$, NiO et MnO en une quantité en poids qui est au moins double de la quantité de Se présent.

**23.** Verre absorbant les I.R. et les U.V. selon l'une quelconque des revendications précédentes, sous forme de feuille.

**24.** Fenêtre faite de verre selon l'une quelconque des revendications précédentes.

**25.** Fenêtre d'automobile faite de verre selon l'une quelconque des revendications précédentes.

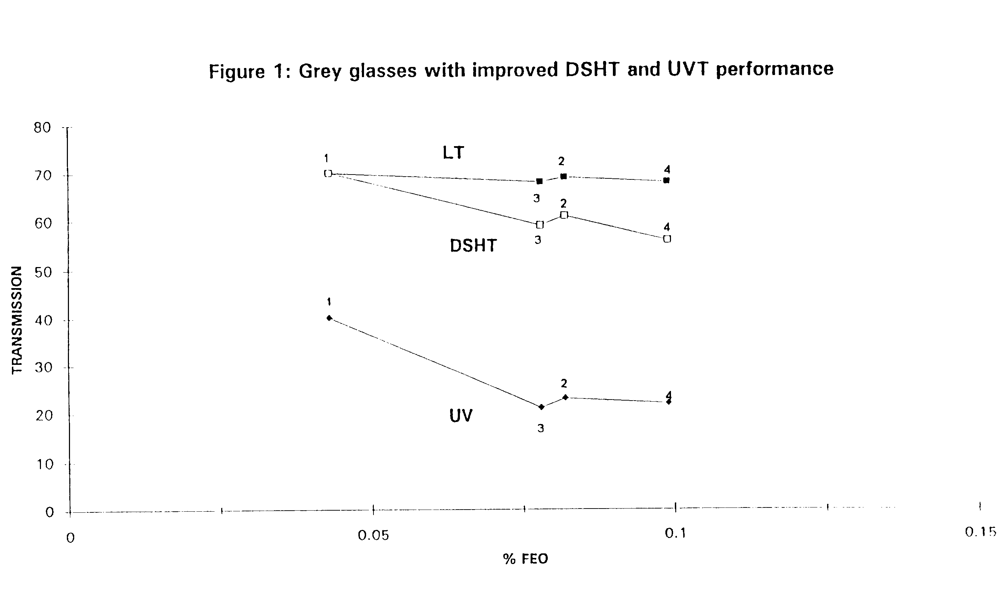

Figure 1: Grey glasses with improved DSHT and UVT performance

EP 0 682 646 B1